(19) **Europäisches Patentamt / European Patent Office / Office européen des brevets**

(11) **EP 4 138 297 B1**

(12) **EUROPEAN PATENT SPECIFICATION**

(45) Date of publication and mention of the grant of the patent:
**06.05.2026 Bulletin 2026/19**

(21) Application number: **20950644.3**

(22) Date of filing: **26.08.2020**

(51) International Patent Classification (IPC):
**H02P 21/30** $^{(2016.01)}$     **H02P 27/12** $^{(2006.01)}$

(52) Cooperative Patent Classification (CPC):
**H02P 27/12; H02P 21/30**

(86) International application number:
**PCT/CN2020/111318**

(87) International publication number:
**WO 2022/040971 (03.03.2022 Gazette 2022/09)**

(54) **DIRECT TORQUE CONTROL METHOD AND APPARATUS FOR ALTERNATING CURRENT MOTOR, AND RELATED COMPONENTS**

VERFAHREN UND VORRICHTUNG ZUR DIREKTEN DREHMOMENTSTEUERUNG FÜR WECHSELSTROMMOTOR UND ZUGEHÖRIGE KOMPONENTEN

PROCÉDÉ ET APPAREIL DE COMMANDE DE COUPLE DIRECT POUR UN MOTEUR À COURANT ALTERNATIF ET COMPOSANTS ASSOCIÉS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**22.02.2023 Bulletin 2023/08**

(73) Proprietor: **CRRC Zhuzhou Electric Locomotive Research Institute Co., Ltd.**
**Zhuzhou, Hunan 412001 (CN)**

(72) Inventors:
- **FENG, Jianghua**
  **Zhuzhou, Hunan 412001 (CN)**
- **WEN, Yuliang**
  **Zhuzhou, Hunan 412001 (CN)**
- **MEI, Wenqing**
  **Zhuzhou, Hunan 412001 (CN)**
- **ZENG, Xiaofan**
  **Zhuzhou, Hunan 412001 (CN)**
- **LI, Cheng**
  **Zhuzhou, Hunan 412001 (CN)**
- **HUANG, Jiade**
  **Zhuzhou, Hunan 412001 (CN)**
- **ZHENG, Hanfeng**
  **Zhuzhou, Hunan 412001 (CN)**
- **ZHANG, Zhaoyang**
  **Zhuzhou, Hunan 412001 (CN)**
- **LIAN, Guoyi**
  **Zhuzhou, Hunan 412001 (CN)**
- **YANG, Fan**
  **Zhuzhou, Hunan 412001 (CN)**

(74) Representative: **Lorenz Seidler Gossel Part. mbB**
**Widenmayerstr. 23**
**80538 München (DE)**

(56) References cited:
CN-A- 101 783 637    CN-A- 101 783 637
CN-A- 104 578 879    CN-A- 105 846 745
CN-A- 110 971 168    DE-A1- 102014 209 289

- ZHANG ZHAOYANG ET AL: "Vector Control Method for PMSM Based on Stator Flux Trajectory", ELECTRIC DRIVE FOR LOCOMOTIVES, 10 January 2019 (2019-01-10), pages 23 - 29, XP055902886, ISSN: 1000-874X, DOI: 10.13890/j.issn.1000-128x.2019.01.005
- ZHANG ZHAOYANG, YULIANG WEN, JIADE HUANG, HANFENG ZHENG: "Vector Control Method for PMSM Based on Stator Flux Trajectory", ELECTRIC DRIVE FOR LOCOMOTIVES, 10 January 2019 (2019-01-10), pages 23 - 29, XP055902886, ISSN: 1000-874X, DOI: 10.13890/j.issn.1000-128x.2019.01.005

## Description

## FIELD

The present disclosure relates to the field of control of an alternating current motor, and in particular to a method and an apparatus for direct torque control of an alternating current motor, and related components.

## BACKGROUND

In the field of alternating current drive, conventional control methods include vector control and direct torque control. The vector control adopts an idea of decoupling control, by which a three-phase current of a motor is transformed into a direct current in a synchronous rotating coordinate system for a closed-loop control. The vector control is to continuously control a system, and has better dynamic and static performance under a medium/high switching frequency, but has a poor dynamic performance under a low switching frequency.

The direct torque control adopts an instantaneous voltage vector theory, rather than the decoupling control. A control based on a hysteresis comparison with an upper or lower boundary is directly performed in a stator coordinate system, in order to control a torque and a flux linkage within a certain tolerance range. Such control system has a rapid torque response without overshoot, and therefore is an alternating current speed regulation method with high dynamic and static performances. With the conventional direct torque control, a stator flux linkage may be controlled to travel on a fixed polygonal flux linkage trajectory, such as an octadecagon flux linkage trajectory or a hexagonal flux linkage trajectory. In this case, the torque is controlled within a certain tolerance range by a comparison with the upper or lower boundary of a hysteresis loop. The tolerance range is regulated by a switching frequency regulator. However, such solution has a problem that a switching frequency is not fixed and a current harmonic content is relatively large, which limits an application scope of the solution to a certain extent. The patent CN110971168A provides an improved induction motor model prediction direct torque control method. According to the method, three voltage vectors to be predicted are screened out from eight voltage vectors through a switch table; and then two-step flux linkage prediction and one-step torque prediction are carried out on the basis of delay compensation, torque variations corresponding to the three voltage vectors in the first-step torque prediction are calculated respectively, the second-step torque prediction is completed according to the torque variations, and finally, the voltage vector capable of minimizing the cost function is selected to act on the inverter. The document XP55902886 provides a vector control strategy of permanent magnet synchronous motor based on optimal stator flux trajectory closed-loop control. The principle of harmonic current minimum optimization PWM was briefly described, the optimal switching angle was provided, and the mathematical relationship between the optimal switching angle and the corresponding optimal flux trajectory was established. Based on the hybrid modulation strategy including asynchronous modulation and synchronous modulation, the vector control system of PMSM's maximum torque-current ratio was constructed.

Therefore, how to provide a solution that can solve the above technical problem is a problem needed to be solved by those skilled in the art at present.

## SUMMARY

An objective of the present disclosure is to provide a method and an apparatus for direct torque control of an alternating current motor, an electronic device and a computer-readable storage medium, with which requirements for a three-phase symmetry, half-wave symmetry and quarter-symmetry of an output voltage can be satisfied, harmonics of the output voltage can be reduced, the direct torque control can be realized at a fixed switching frequency, a pulse output can be optimized, and a wide application range is realized.

In order to solve the above technical problem, a method for direct torque control of an alternating current motor is provided in an embodiment of the present disclosure. The method includes: obtaining an actual position, of a stator flux linkage of the alternating current motor, on a fixed polygonal stator flux linkage trajectory; and performing single-boundary hysteresis comparison processing, where the single-boundary hysteresis comparison processing includes: outputting a pulse signal corresponding to a zero vector to control an inverter, and obtaining a feedback torque of the alternating current motor, in a case that the actual position is coincident with a preset position on a side of the fixed polygonal stator flux linkage trajectory, where preset positions on individual sides of the fixed polygonal stator flux linkage trajectory are located as the same as each other; determining whether the feedback torque satisfies a preset condition; and determining a present effective voltage vector based on the actual position, and outputting a pulse signal corresponding to the present effective voltage vector to control the inverter, on determining that the feedback torque satisfies the preset condition.

In a preferred embodiment, the obtaining an actual position, of a stator flux linkage of the alternating current motor, on a fixed polygonal stator flux linkage trajectory includes: obtaining the actual position of the stator flux linkage of the alternating current motor on the fixed polygonal stator flux linkage trajectory through a motor model observer. The obtaining a feedback torque of the alternating current motor includes: obtaining the feedback torque of the alternating current motor through the motor model observer.

In a preferred embodiment, the preset position is set to be a midpoint position on the side of the fixed polygonal stator flux linkage trajectory.

In a preferred embodiment, the preset position is set to be one of positions that are on the side of the fixed polygonal stator flux linkage trajectory and are symmetrical with respect to a midpoint on the side.

In a preferred embodiment, the method includes: not determining whether the feedback torque satisfies the preset condition, in a case that the pulse signal corresponding to the present effective voltage vector is outputted to control the inverter.

In a preferred embodiment, the method further includes: determining whether a rotation direction of the alternating current motor is a forward direction or a backward direction; and determining the preset condition based on the rotation direction.

In a preferred embodiment, the predetermined condition includes that: the feedback torque is less than a lower boundary of a given hysteresis loop, on determining that the alternating current motor is rotated in the forward direction.

In a preferred embodiment, the predetermined condition includes that: the feedback torque is greater than an upper boundary of a given hysteresis loop, on determining that the alternating current motor is rotated in the backward direction.

In a preferred embodiment, the method further includes: calculating a target value based on a maximum torque and a minimum torque of the alternating current motor, where the target value is equal to half of a difference between the maximum torque and the minimum torque; and obtaining the lower boundary of the given hysteresis loop by calculating a difference between a given torque and the target value.

In order to solve the above technical problem, an apparatus for direct torque control of an alternating current motor is further provided according to an embodiment of the present disclosure. The apparatus includes: an obtaining module, configured to obtain an actual position, of a stator flux linkage of the alternating current motor, on a fixed polygonal stator flux linkage trajectory; a first processing module, configured to perform single-boundary hysteresis comparison processing, where the single-boundary hysteresis comparison processing includes: outputting a pulse signal corresponding to a zero vector to control an inverter, and obtaining a feedback torque of the alternating current motor, in a case that the actual position is coincident with a preset position on a side of the fixed polygonal stator flux linkage trajectory, where preset positions on individual sides of the fixed polygonal stator flux linkage trajectory are located as the same as each other; a determination module, configured to determine whether the feedback torque satisfies a preset condition, and trigger a second processing module on determining that the feedback torque satisfies the preset condition; and the second processing module, configured to determine a present effective voltage vector based on the actual position, and output a pulse signal corresponding to the present effective voltage vector to control the inverter.

In order to solve the above technical problem, an electronic device is further provided according to an embodiment of the present disclosure. The electronic device includes: a memory storing a computer program; and a processor configured to execute the computer program and implement the method according to any one of the above embodiments.

In order to solve the above technical problem, a computer-readable storage medium is further provided according to an embodiment of the present disclosure. The computer-readable storage medium stores a computer program. The computer program, when executed by a processor, implements the method according to any one of the above embodiments.

A method for direct torque control of an alternating current motor is provided in the present disclosure. Zero vectors are inserted at the preset positions on sides of the stator flux linkage trajectory, where the preset positions are located as the same as each other. During the direct torque control, a single-boundary comparison scheme, in which a single boundary of a hysteresis loop is compared with a feedback torque, is adopted to select a corresponding pulse signal. The pulse signal is outputted to control the inverter. Thereby, requirements for a three-phase symmetry, a half-wave symmetry, and a quarter-symmetry of an output voltage can be satisfied, harmonics of the output voltage can be reduced, the direct torque control can be realized at a fixed switching frequency, a pulse output is optimized, and a wide application range is realized. An apparatus for direct torque control of an alternating current motor, an electronic device and a computer-readable storage medium are further provided in the present disclosure, which have the same advantageous effects as the method for direct torque control of an alternating current motor as described above.

## BRIEF DESCRIPTION OF THE DRAWINGS

In order to more clearly describe the embodiments of the present disclosure, drawings to be used in the embodiments of the present disclosure are briefly described hereinafter. It is apparent that the drawings described below show merely some embodiments of the present disclosure. Those skilled in the art may obtain other drawings according to the provided drawings without any creative effort.

Figure 1 is a space vector diagram of a permanent magnet synchronous motor in a stator $\alpha\beta$ coordinate system and a $dq$ coordinate system according to an embodiment of the present disclosure.

Figure 2 is a schematic diagram of a voltage vector and a stator flux linkage trajectory according to an embodiment of the present disclosure.

Figure 3 is a flowchart illustrating steps of a method for direct torque control of an alternating current motor according to an embodiment of the present disclosure.

Figure 4 is a schematic diagram of a stator flux linkage trajectory which is hexagonal and at a synchronous three-division frequency according to an embodiment of the present disclosure.

Figure 5 is a schematic diagram of a preset position according to an embodiment of the present disclosure.

Figure 6 is a schematic diagram of a preset position according to another embodiment of the present disclosure.

Figure 7 is a schematic diagram of a preset position according to another embodiment of the present disclosure.

Figure 8 is a schematic diagram of a torque waveform and torque comparison according to an embodiment of the present disclosure.

Figure 9 is a schematic diagram of a structure for direct torque control of a permanent magnet synchronous motor according to an embodiment of the present disclosure.

Figure 10 is a schematic structural diagram of a direct torque control apparatus for an alternating current motor according to an embodiment of the present disclosure.

Figure 11 is a schematic structural diagram of an electronic device according to the present disclosure.

## DETAILED DESCRIPTION

A core of the present disclosure is to provide a method and an apparatus for direct torque control of an alternating current motor, an electronic device and a computer-readable storage medium, with which requirements for a three-phase symmetry, half-wave symmetry and quarter-symmetry of an output voltage can be satisfied, harmonics of the output voltage can be reduced, the direct torque control can be realized at a fixed switching frequency, a pulse output can be optimized, and a wide application range is realized.

In order to make the objectives, technical solutions and advantages of the embodiments of the present disclosure more clear, hereinafter, technical solutions in the embodiments of the present disclosure will be described clearly and completely in conjunction with the drawings in the embodiments of the present disclosure. It is apparent that the embodiments in the following description are only some embodiments of the present disclosure, rather than all of the embodiments. Based on the embodiments of the present disclosure, all other embodiments obtained by those skilled in the art without any creative effort fall within the protection scope of the present disclosure.

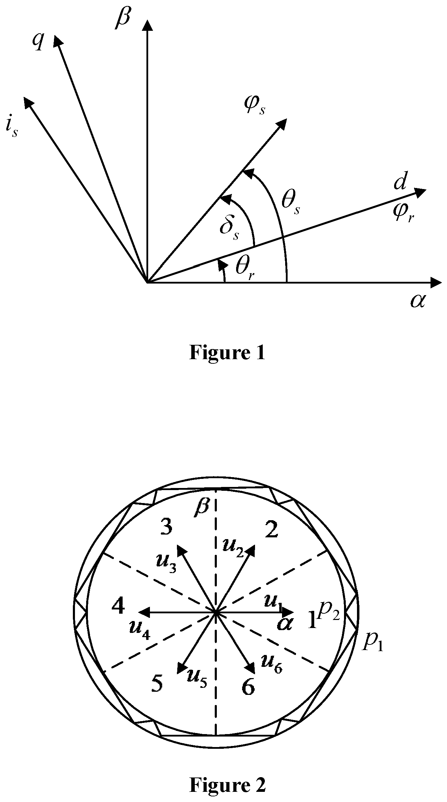

In order to facilitate understanding the method for direct torque control of an alternating current motor provided in the present disclosure, principles of the direct torque control is described hereinafter by taking a permanent magnet synchronous motor as an example. Reference is made to Figure 1, which shows space vectors of a permanent magnet synchronous motor in a stator $\alpha\beta$ coordinate system and a $dq$ coordinate system. The d-axis is defined as an axial direction of an excitation magnetic field of a permanent magnet. The electromagnetic torque equation for a motor is expressed by:

$$T_e = p_n[\frac{\varphi_f|\varphi_s|}{L_d}\sin\delta_s + \frac{L_d - L_q}{2L_dL_q}|\varphi_s|^2\sin 2\delta_s]$$

.

In the equation, $\delta_s$ represents an angle between a stator flux linkage vector $\overrightarrow{\varphi_s}$ and a rotor flux linkage vector $\overrightarrow{\varphi_f}$, which is usually called a torque angle, indicating that $T_e$ may be changed with change of $\delta_s$.

A control variable of the direct torque control is the stator flux linkage vector $\overrightarrow{\varphi_s}$. According to a motor model in a stationary coordinate system for the motor, a relationship between the stator flux linkage $\overrightarrow{\varphi_s}$ and a stator voltage vector $\overrightarrow{U_s}$ is expressed as:

$$p\overrightarrow{\varphi_s} = \overrightarrow{U_s} - R_s\overrightarrow{i_s}$$ .

The above equation illustrates that the stator flux linkage $\overrightarrow{\varphi_s}$ is controlled by the stator voltage vector $\overrightarrow{U_s}$, and an amplitude and an angle of $\overrightarrow{\varphi_s}$ may be regulated by reasonably selecting a static vector.

In a steady state, both the stator flux linkage vector $\overrightarrow{\varphi_s}$ and the rotor rotate at a synchronous speed, and the load angle $\delta_s$ is constant. However, in a transient state, the load angle $\delta_s$ increases in a case that a rotation speed of the stator flux linkage vector $\overrightarrow{\varphi_s}$ is controlled to be greater than a speed of a rotor; and additionally in a case that the amplitude of the stator flux linkage $\overrightarrow{\varphi_s}$ is kept unchanged, the electromagnetic torque increases. In contrast, in a case that the amplitude of the stator flux linkage $\overrightarrow{\varphi_s}$ is kept unchanged, and the rotational speed of the stator flux linkage $\overrightarrow{\varphi_s}$ is controlled to be lower than the speed of the rotor, the load angle $\delta_s$ decreases, and the electromagnetic torque decreases.

Reference is made to Figure 2. Among eight switching states of an inverter, the rotation direction and the magnitude of the stator flux linkage $\overrightarrow{\varphi_s}$ may be controlled by selecting an appropriate switching voltage vector. Thereby, the torque is controlled. In a case that the stator flux linkage is at $p_1$ in a flux linkage sector 1, an upper boundary threshold of the amplitude of the stator flux linkage is reached. In such case, the torque may be increased by selecting $u_2$ so as to rotate the stator flux linkage forward, increasing the load angle and reducing the amplitude of the stator flux linkage; the torque may be decreased by selecting $u_5$ so as to rotate the stator flux linkage backward, increasing the load angle and reducing the amplitude of the stator flux linkage; and the torque may be maintained by selecting a zero vector.

A method for direct torque control of an alternating current motor according to an embodiment of the present disclosure is described in detail hereinafter.

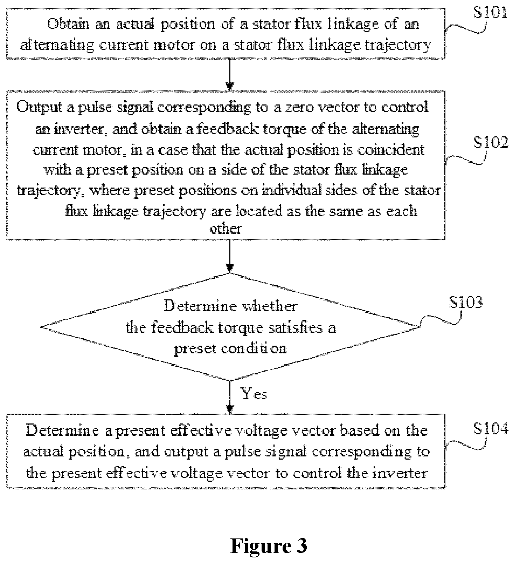

Reference is made to Figure 3. Figure 3 is a flowchart illustrating steps of a method for direct torque control on an alternating current motor according to the an embodiment of the present disclosure. The method includes steps S101 to S104.

In S101, an actual position, of a stator flux linkage of the alternating current motor, on a stator flux linkage trajectory is obtained.

Specifically, in the direct torque control, the stator flux linkage may travel on a fixed polygonal flux linkage trajectory, such as an octagonal stator flux linkage trajectory, and a hexagonal stator flux linkage trajectory. Description of this embodiment is made with a stator flux linkage trajectory that is hexagonal and at a synchronous three-division frequency. Apparently, the present disclosure is applicable to other multi-level converters and polygonal stator flux linkage trajectories at multi-division frequencies.

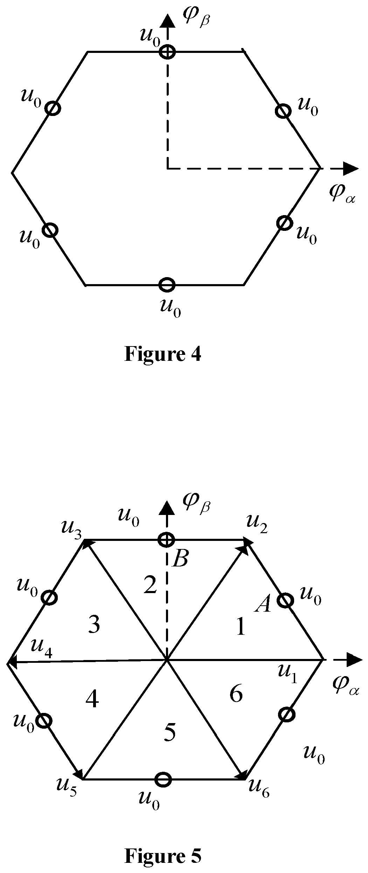

Reference is made to Figure 4. Figure 4 is a schematic diagram of a stator flux linkage trajectory that is hexagonal and at a synchronous tri-division frequency according to an embodiment of the present disclosure. The stator flux linkage travels along the stator flux linkage trajectory. It can be understood that with the stator flux linkage traveling to different positions on the stator flux linkage trajectory, different voltage vectors need to be selected, and different pulse signals are outputted. According to an embodiment, in order to optimize a pulse output, an actual position of the stator flux linkage on the stator flux linkage trajectory is firstly determined. In a specific embodiment, the actual position of the stator flux linkage of an alternating current motor on the stator flux linkage trajectory may be obtained based on a preset time period; or the actual position of the stator flux linkage of the alternating current motor on the stator flux linkage trajectory may be obtained after receiving an acquisition instruction. A triggering condition for obtaining the actual position is not limited herein.

In S102, in response to the actual position being coincident with a preset position on a side of the stator flux linkage trajectory, a pulse signal corresponding to a zero vector is outputted to control an inverter, and a feedback torque of the alternating current motor is obtained, where preset positions on individual sides of the stator flux linkage trajectory are located as the same as each other.

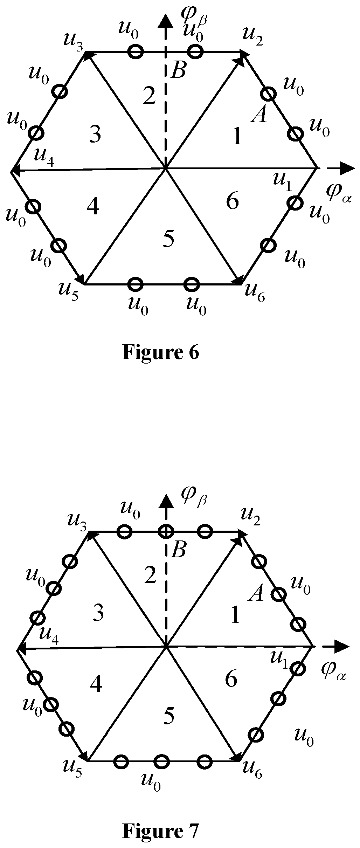

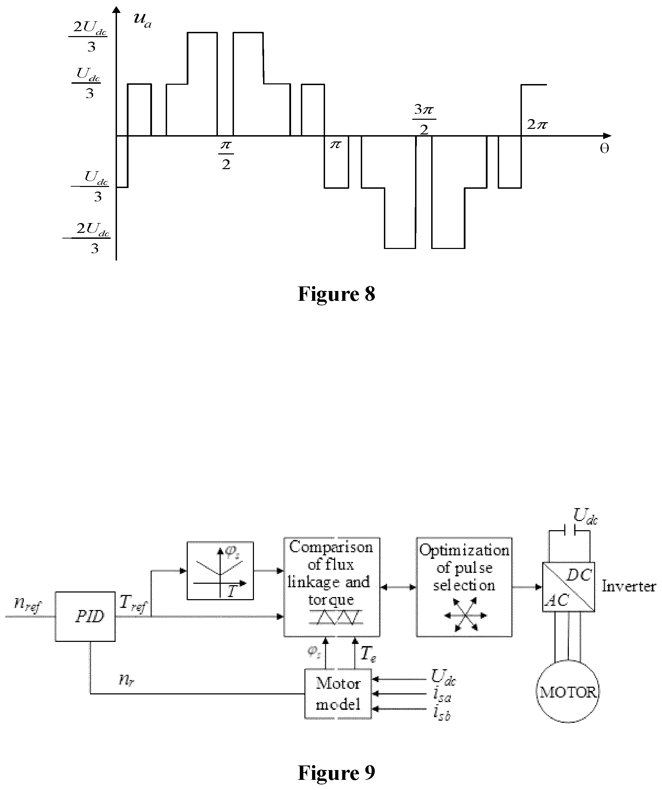

In an example, before step S102, the method may further include an operation of inserting a zero vector at each of the preset positions on each of the sides of the stator flux linkage trajectory. Hence, when the stator flux linkage travels to the preset position, a pulse signal corresponding to the zero vector is outputted to control the inverter, realizing the direct torque control. The preset positions on individual sides of the stator flux linkage trajectory are located as the same as each other, so as to reduce harmonics of an output voltage. Reference is made to Figure 5. As a preferred embodiment, each preset position may be set to be a midpoint position on a side. Reference is made to Figure 6. As another preferred embodiment, each preset position may be set to be one of positions that are on a side of the stator flux linkage trajectory and are symmetrical with respect to a midpoint on the side. In yet another preferred embodiment, each preset position may be one of positions that are symmetrical with respect to a boundary between two adjacent sectors. Reference is made to Figure 7. Zero vectors inserted in sector 1 and sector 2, respectively, are symmetrical with respect to a boundary between sector 1 and sector 2. With the zero vectors inserted at the preset positions as described above, requirements for a three-phase symmetry, a half-wave symmetry, and a quarter symmetry of an output voltage can be satisfied, and harmonics of the output voltage can be further reduced. In such case, a waveform of an outputted phase voltage is as shown in Figure 8.

In an example, in a case that the stator flux linkage travels to a preset position on a side of the stator flux linkage trajectory, since a zero vector is pre-inserted at the preset position, a pulse signal corresponding to the zero vector is outputted to control the inverter. In outputting the pulse signal corresponding to the zero vector, the feedback torque of the alternating current motor is obtained for hysteresis comparison, so as to control the torque within a certain tolerance range. In an embodiment, the feedback torque of the alternating current motor may be obtained based on a preset acquisition period; or the feedback torque of the alternating current motor may be obtained on reception of an acquisition instruction. A triggering condition for obtaining the feedback torque of the alternating current motor is not specifically limited herein.

In S103, it is determined whether the feedback torque satisfies a preset condition. In response to the feedback torque satisfying the preset condition, the process proceeds to S104.

An objective of this step is to perform hysteresis comparison based on the feedback torque, so as to determine whether it is necessary to regulate and control the torque within a certain tolerance range. According to the invention, a single-boundary hysteresis comparison is adopted, by which the feedback torque is compared with an upper boundary of a preset given hysteresis loop or a lower boundary of the given hysteresis loop. Correspondingly, the preset condition is that the feedback torque is less than the lower boundary of the given hysteresis loop or greater than the upper boundary of the given hysteresis loop. It can be understood that different effective voltage vectors and zero vectors have different effects on the torque when the alternating current motor is rotated in a forward direction or backward direction. In a case that the alternating current motor is rotated in the forward direction, the torque decreases when the zero vector acts; and in a case that the torque is decreased to the lower boundary of the given hysteresis loop, an effective voltage vector is selected to increase the torque. In a case that the alternating current motor is rotated in the backward direction, the torque increases when the zero vector acts; and in a case that the torque is increased to the upper boundary of the given hysteresis loop, an effective vector is selected to reduce the torque. As a preferred embodiment, in order to improve an accuracy of the direct torque control, the method for direct torque control on an alternating current motor further includes: determining whether a rotation direction of the alternating current motor is a forward direction or a backward direction; and determining the preset condition based on the rotation direction. In an example, in a case that the alternating current motor is rotated in the forward direction, the preset condition is set to that the feedback torque is less than the lower boundary of the given hysteresis loop; and in a case that the alternating current motor is rotated in the backward direction, the preset condition is set to that the feedback torque is greater than the upper boundary of the given hysteresis loop. It can be understood that in a case that the alternating current motor is rotated in the forward direction, the preset condition is not satisfied in a case that the feedback torque is greater than or equal to the lower boundary of the given hysteresis loop. In a case that the alternating current motor is rotated in the backward direction, the preset condition is not satisfied in a case that the feedback torque is less than or equal to the upper boundary of the given hysteresis loop.

As a preferred embodiment, the lower boundary of the given hysteresis loop may be obtained by: calculating a target value based on a maximum torque and a minimum torque of the alternating current motor, where the target value is equal to a half of a difference between the maximum torque and the minimum torque; and obtaining the lower boundary of the given hysteresis loop by calculating a difference between a given torque and the target value.

In S104, a present effective voltage vector is determined based on the actual position, and a pulse signal corresponding to the present effective voltage vector is outputted to control the inverter.

Reference is made to Figure 5 to Figure 7. The stator flux linkage trajectory is divided into 6 sectors by effective voltage vectors $u_1$ to $u_6$. In a case that the stator flux linkage travels on different sectors, different present effective voltage vectors are selected. Therefore, it is required to select the effective voltage vector based on the actual position of the stator flux linkage, and then a pulse signal corresponding to the present effective voltage vector is outputted to control the inverter.

Reference is made to Figure 5. In an example, the preset position is set to be a midpoint position on a side, and it is assumed that the stator flux linkage is currently traveling on a first sector. In a case that the alternating current motor is rotated in a forward direction, a zero vector $u_0$ is selected when the torque is required to be decreased. In a case that the torque is decreased to the lower boundary of the given hysteresis loop, a voltage vector $u_3$ parallel to the side where the actual position of the stator flux linkage is currently located is selected as the present effective voltage vector, so as to increase the torque. When the effective voltage vector is selected, S103 of determining whether the feedback torque satisfies the preset condition is not performed. It can be understood that when the effective voltage vector is selected, the torque increases, and the stator flux linkage travels counterclockwise. In a case that the stator flux linkage travels to the preset position, the zero vector $u_0$ is outputted and the torque decreases. When the zero vector is selected, the steps of S103 to S104 are repeated. A schematic diagram of a torque waveform and torque comparison is as shown in Figure 8. In a case that the alternating current motor is rotated in a backward direction, the zero vector $u_0$ is selected when the torque is required to be increased. In a case that the torque is increased to the upper boundary of the given hysteresis loop, a voltage vector $u_6$ parallel to the side where the actual position of the stator flux linkage is currently located is selected as the present effective voltage vector, so as to decrease the torque. It can be understood that, with the solution according to the present disclosure, a control of a fixed carrier ratio can be realized. The carrier ratio is obtained by dividing a current switching frequency by a current operating frequency. Since the operating frequency is fixed, the switching frequency is fixed.

It should be noted that the zero vector includes $u_0$ and $u_7$, which are collectively referred to as $u_0$ here. Specific use of $u_0$ or $u_7$ should be determined based on a principle of minimum switching times.

It can be seen that, in the present embodiment, zero vectors are inserted at the preset positions on sides of the stator flux linkage trajectory, where the preset positions are located as the same as each other. During the direct torque control, a single-boundary comparison scheme, in which a single boundary of a hysteresis loop is compared with a feedback torque, is adopted to select a corresponding pulse signal. The pulse signal is outputted to control the inverter. Thereby, requirements for a three-phase symmetry, a half-wave symmetry, and a quarter-symmetry of an output voltage can be satisfied, harmonics of the output voltage can be reduced, the direct torque control can be realized at a fixed switching frequency, a pulse output is optimized, and a wide application range is realized.

As a preferred embodiment on the basis of the above, obtaining the actual position of the stator flux linkage of the alternating current motor on the stator flux linkage trajectory may include: obtaining the actual position of the stator flux linkage of the alternating current motor on the stator flux linkage trajectory through a motor model observer. Correspondingly, obtaining the feedback torque of the alternating current motor may include: obtaining the feedback torque of the alternating current motor through the motor model observer.

Reference is made to Figure 9. Figure 9 is a schematic diagram of a structure for direct torque control on a permanent magnet synchronous motor according to an embodiment of the present disclosure. A converter collects an intermediate voltage and two stator currents. A motor model observer observes to obtain a stator flux linkage, an electromagnetic torque, and a rotation speed of the alternating current motor.

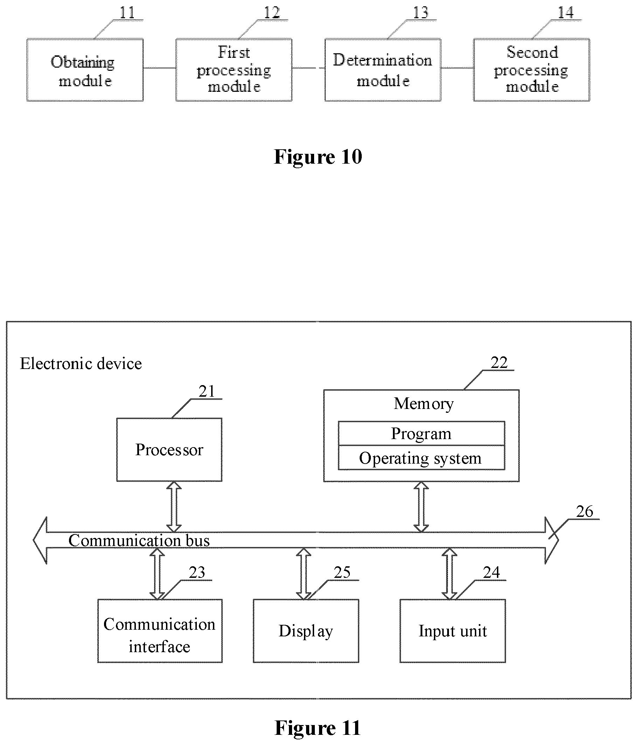

Reference is made to Figure 10. Figure 10 is a schematic structural diagram of an apparatus for direct torque control on an alternating current motor according to an embodiment of the present disclosure. The apparatus includes an obtaining module 11, a first processing module 12, a determination module 13, and a second processing module 14.

The obtaining module 11 is configured to obtain an actual position, of a stator flux linkage of the alternating current motor, on a stator flux linkage trajectory.

The first processing module 12 is configured to: output a pulse signal corresponding to a zero vector to control an inverter, and obtain a feedback torque of the alternating current motor, in a case that the actual position is coincident with a preset position on a side of the stator flux linkage trajectory, where preset positions on individual sides of the stator flux linkage trajectory are located as the same as each other.

The determination module 13 is configured to determine whether the feedback torque satisfies a preset condition, and trigger the second processing module 14 on determining that the feedback torque satisfies the preset condition.

The second processing module 14 is configured to determine a present effective voltage vector based on the actual position, and output a pulse signal corresponding to the present effective voltage vector to control the inverter.

In the embodiment, zero vectors are inserted at the preset positions on the sides of the stator flux linkage trajectory, where the preset positions are located as the same as each other. During the direct torque control, a single-boundary comparison scheme, in which a single boundary of a hysteresis loop is compared with a feedback torque, is adopted to select a corresponding pulse signal. The pulse signal is outputted to control the inverter. Thereby, requirements for a three-phase symmetry, a half-wave symmetry, and a quarter-symmetry of an output voltage can be satisfied, harmonics of the output voltage can be reduced, the direct torque control can be realized at a fixed switching frequency, a pulse output is optimized, and a wide application range is realized

As a preferred embodiment, the obtaining module 11 is specifically configured to obtain the actual position of the stator flux linkage of the alternating current motor on the stator flux linkage trajectory through a motor model observer. Correspondingly, a process of obtaining the feedback torque of the alternating current motor includes: obtaining the feedback torque of the alternating current motor through the motor model observer.

As a preferred embodiment, the preset position is set to be a midpoint position on the side of the stator flux linkage trajectory.

As a preferred embodiment, the preset position is set to be one of positions that are on the side of the stator flux linkage trajectory and are symmetrical with respect to a midpoint on the side.

As a preferred embodiment, the determination module 13 is further configured to: not determine whether the feedback torque satisfies the preset condition, in a case that the pulse signal corresponding to the present effective voltage vector is outputted to control the inverter.

As a preferred embodiment, the apparatus further includes a pre-processing module.

The pre-processing module is configured to: determine whether a rotation direction of the alternating current motor is a forward direction or a backward direction; and determine the preset condition based on the rotation direction.

As a preferred embodiment, the preset condition includes that: the feedback torque is less than a lower boundary of a given hysteresis loop, in a case that the alternating current motor is rotated in the forward direction.

As a preferred embodiment, the preset condition includes that: the feedback torque is greater than an upper boundary of a given hysteresis loop, in a case that the alternating current motor is rotated in the backward direction.

As a preferred embodiment, the apparatus further includes a computing module.

The computing module is configured to: calculate a target value based on a maximum torque and a minimum torque of the alternating current motor, where the target value is equal to a half of a difference between the maximum torque and the minimum torque; and obtain the lower boundary of the given hysteresis loop by calculating a difference between a given torque and the target value.

In another aspect, an electronic device is further provided in the present disclosure. Reference is made to Figure 11, which shows a schematic structural diagram of an electronic device according to an embodiment of the present disclosure. The electronic device according to an embodiment may include a processor 21 and a memory 22.

In an embodiment, the electronic device may further include a communication interface 23, an input unit 24, a display 25, and a communication bus 26.

The processor 21, the memory 22, the communication interface 23, the input unit 24, and the display 25 communicate with each other through the communication bus 26.

In an embodiment of the present disclosure, the processor 21 may be a central processing unit (CPU), an application-specific integrated circuit, a digital signal processor, a field programmable gate array, or other programmable logic devices.

The processor may call programs stored in the memory 22. In an example, the processor may perform operations that belong to the method for direct torque control on an alternating current motor and are performed at the electronic device.

The memory 22 is configured to store at least one program. The program may include program code, and the program code includes computer operation instructions. In an embodiment of the present disclosure, the memory stores at least a program for implementing the following functions: obtaining an actual position, of a stator flux linkage of the alternating current motor, on a stator flux linkage trajectory; outputting a pulse signal corresponding to a zero vector to control an inverter, and obtaining a feedback torque of the alternating current motor, in a case that the actual position is coincident with a preset position on a boundary side of the stator flux linkage trajectory, where preset positions on individual sides of the stator flux linkage trajectory are located as the same as each other; determining whether the feedback torque satisfies a preset condition; and determining a present effective voltage vector based on the actual position, and outputting a pulse signal corresponding to the present effective voltage vector to control the inverter, on determining that the feedback torque satisfies the preset condition.

In the embodiment, zero vectors are inserted at the preset positions on the sides of the stator flux linkage trajectory, where the preset positions are located as the same as each other. During the direct torque control, a single-boundary comparison scheme, in which a single boundary of a hysteresis loop is compared with a feedback torque, is adopted to select a corresponding pulse signal. The pulse signal is outputted to control the inverter. Thereby, requirements for a three-phase symmetry, a half-wave symmetry, and a quarter-symmetry of an output voltage can be satisfied, harmonics of the output voltage can be reduced, the direct torque control can be realized at a fixed switching frequency, a pulse output is optimized, and a wide application range is realized.

In a possible implementation, the memory 22 may include a program storage area and a data storage area. The program storage area may store an operating system, an application program required for at least one function (such as a function for calculating a lower boundary of a given hysteresis loop), and the like. The data storage area may store data created during a use of a computer.

Additionally, the memory 22 may include a high-speed random access memory, and may also include a non-volatile memory, such as at least one magnetic disk storage device, or other volatile solid-state storage devices.

The communication interface 23 may be an interface of a communication module, for example, an interface of a GSM module.

In an embodiment of the present disclosure, the electronic device may further include a display 24, an input unit 25, and the like.

The structure of the Internet of Things device shown in Figure 11 constitutes no limitation on the Internet of Things device in the embodiments in the present disclosure. In practice, the electronic device may include more or less components than those shown in Figure 11, or some of the components may be combined with each other.

In another aspect, a computer-readable storage medium is further provided according to an embodiment of the present disclosure. The computer-readable storage medium stores a computer program. The computer program, when executed by a processor, implements the method for direct torque control on an alternating current motor according to any one of the above embodiments.

Description of the computer-readable storage medium may refer to the above embodiments, which are not repeated here.

The computer-readable storage medium has the same advantageous effects as the method for direct torque control on an alternating current motor.

It should be further noted that, the relational terms such as "first", "second" and the like are only used herein to distinguish one entity or operation from another entity or operation, rather than to necessitate or imply that an actual relationship or order exists between the entities or operations. Furthermore, terms "include", "comprise" or any other variants thereof are intended to be non-exclusive. Therefore, a process, method, article or device including a series of elements includes not only the elements but also other elements that are not enumerated or other elements inherent to such process, method, article or device. Unless expressively limited otherwise, an element defined by a statement of "comprising (including) one..." does not exclude a case that other similar elements exist in the process, method, article or device including the element.

Those skilled in the art may implement or practice the present disclosure based on the above descriptions of the disclosed embodiments. Various modifications to the embodiments are apparent to the person skilled in the art, and the scope of protection is defined by the appended claims.

**Claims**

**1.** A method for direct torque control of an alternating current motor, comprising:

obtaining an actual position, of a stator flux linkage of the alternating current motor, on a fixed polygonal stator flux linkage trajectory; and performing single-boundary hysteresis comparison processing, wherein the single-boundary hysteresis comparison processing comprises:

outputting a pulse signal corresponding to a zero vector to control an inverter, and obtaining a feedback torque of the alternating current motor, wherein the actual position is coincident with a preset position on a side of the fixed polygonal stator flux linkage trajectory, wherein preset positions on individual sides of the fixed polygonal stator flux linkage trajectory are located as the same as each other;
determining whether the feedback torque satisfies a preset condition corresponding to the single-boundary hysteresis comparison; and
determining a present effective voltage vector based on the actual position, and outputting a pulse signal corresponding to the present effective voltage vector to control the inverter, on determining that the feedback torque satisfies the preset condition.

2. The method according to claim 1, wherein

the obtaining an actual position, of a stator flux linkage of the alternating current motor, on a fixed polygonal stator flux linkage trajectory comprises:
obtaining the actual position of the stator flux linkage of the alternating current motor on the fixed polygonal stator flux linkage trajectory through a motor model observer; and
the obtaining a feedback torque of the alternating current motor comprises:
obtaining the feedback torque of the alternating current motor through the motor model observer.

3. The method according to claim 1, wherein the preset position is set to be a midpoint position on the side of the fixed polygonal stator flux linkage trajectory.

4. The method according to claim 1, wherein the preset position is set to be one of positions that are on the side of the fixed polygonal stator flux linkage trajectory and are symmetrical with respect to a midpoint on the side.

5. The method according to claim 1, further comprising: not determining whether the feedback torque satisfies the preset condition, in a case that the pulse signal corresponding to the present effective voltage vector is outputted to control the inverter.

6. The method according to claim 1, further comprising:

determining whether a rotation direction of the alternating current motor is a forward direction or a backward direction; and
determining the preset condition based on the rotation direction.

7. The method according to claim 6, wherein the preset condition comprises that:
the feedback torque is less than a lower boundary of a given hysteresis loop, on determining that the alternating current motor is rotated in the forward direction.

8. The method according to claim 6, wherein the preset condition comprises that:
the feedback torque is greater than an upper boundary of a given hysteresis loop, on determining that the alternating current motor is rotated in the backward direction.

9. The method according to claim 7, further comprising:

calculating a target value based on a maximum torque and a minimum torque of the alternating current motor, wherein the target value is equal to half of a difference between the maximum torque and the minimum torque; and
obtaining the lower boundary of the given hysteresis loop by calculating a difference between a given torque and the target value.

10. An apparatus for direct torque control of an alternating current motor, comprising:

an obtaining module, configured to obtain an actual position, of a stator flux linkage of the alternating current motor, on a fixed polygonal stator flux linkage trajectory;
a first processing module, configured to perform single-boundary hysteresis comparison processing, wherein the single-boundary hysteresis comparison processing comprises: outputting a pulse signal corresponding to a zero vector to control an inverter, and obtaining a feedback torque of the alternating current motor, wherein the actual position is coincident with a preset position on a side of the fixed polygonal stator flux linkage trajectory, wherein preset positions on individual sides of the fixed polygonal stator flux linkage trajectory are located as the same as each other;
a determination module, configured to determine whether the feedback torque satisfies a preset condition corresponding to the single-boundary hysteresis comparison;

and trigger a second processing module on determining that the feedback torque satisfies the preset condition; and

the second processing module, configured to determine a present effective voltage vector based on the actual position, and output a pulse signal corresponding to the present effective voltage vector to control the inverter.

11. An electronic device, comprising:

a memory storing a computer program; and

a processor, configured to execute the computer program and implement the method according to any one of claims 1 to 9.

12. A computer-readable storage medium storing a computer program, wherein

the computer program, when executed by a processor, implements the method according to any one of claims 1 to 9.

**Patentansprüche**

1. Verfahren zur direkten Drehmomentregelung eines Wechselstrommotors, umfassend:

Erfassen einer tatsächlichen Position einer Statorflussverkettung des Wechselstrommotors auf einer festen polygonalen Bahn der Statorflussverkettung; und

Durchführen einer Einzelschwellen-Hysteresevergleichsverarbeitung, wobei die Einzelschwellen-Hysteresevergleichsverarbeitung umfasst:

Ausgeben eines einem Nullvektor entsprechenden Pulssignals zur Ansteuerung eines Wechselrichters; und

Erfassen eines Rückkopplungsdrehmoments des Wechselstrommotors, wobei die tatsächliche Position mit einer vorgegebenen Position auf einer Seite der festen polygonalen Bahn der Statorflussverkettung zusammenfällt, wobei vorgegebene Positionen auf einzelnen Seiten der festen polygonalen Bahn der Statorflussverkettung jeweils an derselben relativen Lage angeordnet sind;

Bestimmen, ob das Rückkopplungsdrehmoment eine der Einzelschwellen-Hysteresevergleichsverarbeitung entsprechende vorgegebene Bedingung erfüllt; und

Bestimmen eines gegenwärtigen wirksamen Spannungsvektors auf der Grundlage der tatsächlichen Position und Ausgeben eines dem gegenwärtigen wirksamen Spannungsvektor entsprechenden Pulssignals zur Ansteuerung des Wechselrichters, wenn bestimmt wird, dass das Rückkopplungsdrehmoment die vorgegebene Bedingung erfüllt.

2. Verfahren nach Anspruch 1, wobei

das Erfassen einer tatsächlichen Position einer Statorflussverkettung des Wechselstrommotors auf einer festen polygonalen Bahn der Statorflussverkettung umfasst:

Erfassen der tatsächlichen Position der Statorflussverkettung des Wechselstrommotors auf der festen polygonalen Bahn der Statorflussverkettung durch einen Motorbeobachter auf Modellbasis; und

das Erfassen eines Rückkopplungsdrehmoments des Wechselstrommotors umfasst:

Erfassen des Rückkopplungsdrehmoments des Wechselstrommotors durch den Motorbeobachter auf Modellbasis.

3. Verfahren nach Anspruch 1, wobei die vorgegebene Position als eine Mittelpunktposition auf der Seite der festen polygonalen Bahn der Statorflussverkettung festgelegt ist.

4. Verfahren nach Anspruch 1, wobei die vorgegebene Position als eine von Positionen festgelegt ist, die auf der Seite der festen polygonalen Bahn der Statorflussverkettung liegen und bezüglich eines Mittelpunkts auf der Seite symmetrisch sind.

5. Verfahren nach Anspruch 1, ferner umfassend:

Nicht-Bestimmen, ob das Rückkopplungsdrehmoment die vorgegebene Bedingung erfüllt, in einem Fall, dass das dem gegenwärtigen wirksamen Spannungsvektor entsprechende Pulssignal zur Ansteuerung des Wechselrichters ausgegeben wird.

6. Verfahren nach Anspruch 1, ferner umfassend:

Bestimmen, ob eine Drehrichtung des Wechselstrommotors eine Vorwärtsrichtung oder eine Rückwärtsrichtung ist; und

Bestimmen der vorgegebenen Bedingung auf der Grundlage der Drehrichtung.

7. Verfahren nach Anspruch 6, wobei die vorgegebene Bedingung umfasst, dass:

das Rückkopplungsdrehmoment kleiner ist als eine untere Grenze einer gegebenen Hystereseschleife, wenn bestimmt wird, dass der Wechselstrommotor in Vorwärtsrichtung rotiert.

**8.** Verfahren nach Anspruch 6, wobei die vorgegebene Bedingung umfasst, dass:
das Rückkopplungsdrehmoment größer ist als eine obere Grenze einer gegebenen Hystereseschleife, wenn bestimmt wird, dass der Wechselstrommotor in Rückwärtsrichtung rotiert.

**9.** Verfahren nach Anspruch 7, ferner umfassend:

Berechnen eines Zielwerts auf der Grundlage eines maximalen Drehmoments und eines minimalen Drehmoments des Wechselstrommotors, wobei der Zielwert gleich der Hälfte einer Differenz zwischen dem maximalen Drehmoment und dem minimalen Drehmoment ist; und
Erfassen der unteren Grenze der gegebenen Hystereseschleife durch Berechnen einer Differenz zwischen einem gegebenen Drehmoment und dem Zielwert.

**10.** Vorrichtung zur direkten Drehmomentregelung eines Wechselstrommotors, umfassend:

ein Erfassungsmodul, das dazu konfiguriert ist, eine tatsächliche Position einer Statorflussverkettung des Wechselstrommotors auf einer festen polygonalen Bahn der Statorflussverkettung zu erfassen;
ein erstes Verarbeitungsmodul, das dazu konfiguriert ist, eine Einzelschwellen-Hysteresevergleichsverarbeitung durchzuführen,
wobei die Einzelschwellen-Hysteresevergleichsverarbeitung umfasst: Ausgeben eines einem Nullvektor entsprechenden Pulssignals zur Ansteuerung eines Wechselrichters und Erfassen eines Rückkopplungsdrehmoments des Wechselstrommotors, wobei die tatsächliche Position mit einer vorgegebenen Position auf einer Seite der festen polygonalen Bahn der Statorflussverkettung zusammenfällt, wobei vorgegebene Positionen auf einzelnen Seiten der festen polygonalen Bahn der Statorflussverkettung jeweils an derselben relativen Lage angeordnet sind;
ein Bestimmungsmodul, das dazu konfiguriert ist, zu bestimmen, ob das Rückkopplungsdrehmoment eine der Einzelschwellen-Hysteresevergleichsverarbeitung entsprechende vorgegebene Bedingung erfüllt, und bei Bestimmung, dass das Rückkopplungsdrehmoment die vorgegebene Bedingung erfüllt, ein zweites Verarbeitungsmodul auszulösen; und
das zweite Verarbeitungsmodul, das dazu konfiguriert ist, einen gegenwärtigen wirksamen Spannungsvektor auf der Grundlage der tatsächlichen Position zu bestimmen und ein dem gegenwärtigen wirksamen Spannungsvektor entsprechendes Pulssignal zur Ansteuerung des Wechselrichters auszugeben.

**11.** Elektronische Vorrichtung, umfassend:

einen Speicher, der ein Computerprogramm speichert; und
einen Prozessor, der dazu konfiguriert ist, das Computerprogramm auszuführen und das Verfahren nach einem der Ansprüche 1 bis 9 zu implementieren.

**12.** Computerlesbares Speichermedium, das ein Computerprogramm speichert, wobei
das Computerprogramm, wenn es von einem Prozessor ausgeführt wird, das Verfahren nach einem der Ansprüche 1 bis 9 implementiert.

**Revendications**

**1.** Procédé de commande directe du couple d'un moteur à courant alternatif, comprenant :

l'obtention d'une position réelle d'un flux statorique couplé du moteur à courant alternatif sur une trajectoire polygonale fixe du flux statorique couplé ; et
l'exécution d'un traitement de comparaison d'hystérésis à frontière unique, dans lequel le traitement de comparaison d'hystérésis à frontière unique comprend :

l'émission d'un signal d'impulsion correspondant à un vecteur nul pour commander un onduleur ; et
l'obtention d'un couple de rétroaction du moteur à courant alternatif, la position réelle coïncidant avec une position prédéfinie sur un côté de la trajectoire polygonale fixe du flux statorique couplé, les positions prédéfinies sur les côtés individuels de la trajectoire polygonale fixe du flux statorique couplé étant situées de manière identique les unes par rapport aux autres ;
la détermination de savoir si le couple de rétroaction satisfait à une condition prédéfinie correspondant à la comparaison d'hystérésis à frontière unique ; et
la détermination d'un vecteur de tension effectif actuel sur la base de la position réelle, et l'émission d'un signal d'impulsion correspondant au vecteur de tension effectif actuel pour commander l'onduleur, lorsqu'il est déterminé que le couple de rétroaction satisfait à la condition prédéfinie.

**2.** Procédé selon la revendication 1, dans lequel l'obtention d'une position réelle du flux statorique couplé du moteur à courant alternatif sur la trajectoire polygonale fixe du flux statorique couplé comprend :

l'obtention de la position réelle du flux statorique couplé du moteur à courant alternatif sur la trajectoire polygonale fixe du flux statorique couplé au moyen d'un observateur de modèle moteur ; et

l'obtention d'un couple de rétroaction du moteur à courant alternatif comprend :

l'obtention du couple de rétroaction du moteur à courant alternatif au moyen de l'observateur de modèle moteur.

3. Procédé selon la revendication 1, dans lequel la position prédéfinie est réglée comme étant une position médiane sur le côté de la trajectoire polygonale fixe du flux statorique couplé.

4. Procédé selon la revendication 1, dans lequel la position prédéfinie est réglée comme étant l'une de positions qui se trouvent sur le côté de la trajectoire polygonale fixe du flux statorique couplé et qui sont symétriques par rapport à un point médian sur ledit côté.

5. Procédé selon la revendication 1, comprenant en outre :
le fait de ne pas déterminer si le couple de rétroaction satisfait à la condition prédéfinie, dans un cas où le signal d'impulsion correspondant au vecteur de tension effectif actuel est émis pour commander l'onduleur.

6. Procédé selon la revendication 1, comprenant en outre :

la détermination de savoir si un sens de rotation du moteur à courant alternatif est un sens avant ou un sens arrière ; et
la détermination de la condition prédéfinie sur la base du sens de rotation.

7. Procédé selon la revendication 6, dans lequel la condition prédéfinie comprend que :
le couple de rétroaction est inférieur à une limite inférieure d'une boucle d'hystérésis donnée, lorsqu'il est déterminé que le moteur à courant alternatif tourne dans le sens avant.

8. Procédé selon la revendication 6, dans lequel la condition prédéfinie comprend que :
le couple de rétroaction est supérieur à une limite supérieure d'une boucle d'hystérésis donnée, lorsqu'il est déterminé que le moteur à courant alternatif tourne dans le sens arrière.

9. Procédé selon la revendication 7, comprenant en outre :

le calcul d'une valeur cible sur la base d'un couple maximal et d'un couple minimal du moteur à courant alternatif, la valeur cible étant égale à la moitié d'une différence entre le couple maximal et le couple minimal ; et
l'obtention de la limite inférieure de la boucle d'hystérésis donnée en calculant une différence entre un couple donné et la valeur cible.

10. Dispositif de commande directe du couple d'un moteur à courant alternatif, comprenant :

un module d'obtention, configuré pour obtenir une position réelle d'un flux statorique couplé du moteur à courant alternatif sur une trajectoire polygonale fixe du flux statorique couplé ;
un premier module de traitement, configuré pour exécuter un traitement de comparaison d'hystérésis à frontière unique,
dans lequel le traitement de comparaison d'hystérésis à frontière unique comprend : l'émission d'un signal d'impulsion correspondant à un vecteur nul pour commander un onduleur, et l'obtention d'un couple de rétroaction du moteur à courant alternatif, la position réelle coïncidant avec une position prédéfinie sur un côté de la trajectoire polygonale fixe du flux statorique couplé, les positions prédéfinies sur les côtés individuels de la trajectoire polygonale fixe du flux statorique couplé étant situées de manière identique les unes par rapport aux autres ;
un module de détermination, configuré pour déterminer si le couple de rétroaction satisfait à une condition prédéfinie correspondant à la comparaison d'hystérésis à frontière unique ; et pour déclencher un second module de traitement lorsqu'il est déterminé que le couple de rétroaction satisfait à la condition prédéfinie ; et
le second module de traitement, configuré pour déterminer un vecteur de tension effectif actuel sur la base de la position réelle, et émettre un signal d'impulsion correspondant au vecteur de tension effectif actuel pour commander l'onduleur.

11. Dispositif électronique, comprenant :

une mémoire stockant un programme informatique ; et
un processeur, configuré pour exécuter le programme informatique et mettre en œuvre le procédé selon l'une quelconque des revendications 1 à 9.

12. Support de stockage lisible par ordinateur stockant un programme informatique, dans lequel le programme informatique, lorsqu'il est exécuté par un processeur, met en œuvre le procédé selon l'une quelconque des revendications 1 à 9.

**Figure 1**

**Figure 2**

Obtain an actual position of a stator flux linkage of an alternating current motor on a stator flux linkage trajectory — S101

Output a pulse signal corresponding to a zero vector to control an inverter, and obtain a feedback torque of the alternating current motor, in a case that the actual position is coincident with a preset position on a side of the stator flux linkage trajectory, where preset positions on individual sides of the stator flux linkage trajectory are located as the same as each other — S102

Determine whether the feedback torque satisfies a preset condition — S103

Yes

Determine a present effective voltage vector based on the actual position, and output a pulse signal corresponding to the present effective voltage vector to control the inverter — S104

**Figure 3**

**Figure 4**

**Figure 5**

**Figure 6**

**Figure 7**

**Figure 8**

**Figure 9**

| Obtaining module | First processing module | Determination module | Second processing module |
|---|---|---|---|
| 11 | 12 | 13 | 14 |

**Figure 10**

Electronic device

Processor 21

Memory 22
Program
Operating system

Communication bus 26

Communication interface 23

Display 25

Input unit 24

**Figure 11**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 110971168 A